# EUROPÄISCHE PATENTSCHRIFT

(11) **EP 0 917 678 B1**
(45) Veröffentlichungstag und Bekanntmachung des Hinweises auf die Patenterteilung: **29.08.2001**
(21) Anmeldenummer: 97938867.5
(22) Anmeldetag: 02.08.1997
(51) Int. Cl.: G06F 1/00, G07C 9/00

(54) **VERFAHREN ZUR VERIFIZIERUNG DER IDENTITÄT EINES BENUTZERS EINER MIT EINER TASTATUR ZUR ERZEUGUNG ALPHANUMERISCHER ZEICHEN ZU BEDIENENDEN DATENVERARBEITUNGSANLAGE**
METHOD FOR VERIFYING THE IDENTITY OF A USER OF A DATA PROCESSING UNIT WITH A KEYBOARD DESIGNED TO PRODUCE ALPHANUMERIC CHARACTERS
PROCEDE POUR VERIFIER L'IDENTITE DE L'UTILISATEUR D'UN ORDINATEUR COMPORTANT UN CLAVIER GENERANT DES CARACTERES ALPHANUMERIQUES

(30) Priorität: 03.08.1996 DE 19631484
(43) Veröffentlichungstag der Anmeldung: 26.05.1999
(73) Patentinhaber: Bartmann, Dieter, 85435 Erding (DE)
(72) Erfinder: Bartmann, Dieter, 85435 Erding (DE); Bartmann, Dieter Andreas, 85435 Erding (DE)
(74) Vertreter: LOUIS, PÖHLAU, LOHRENTZ & SEGETH
(86) Internationale Anmeldenummer: EP9704221
(87) Internationale Veröffentlichungsnummer: WO9806020

(56) Entgegenhaltungen:
- US-A- 4 621 334
- US-A- 4 805 222

## Beschreibung

Ein unbefugter Zugriff auf Daten, die in einem Rechner abgelegt sind, die unerlaubte Benutzung von Computerprogrammen, eine unsichere oder fehlende Identitätsprüfung beim Zugang zu Online Services oder bei Interactive TV, die mißbräuchliche Verwendung von magnetstreifen- bzw. chipbehafteten Bankkarten sowie das Fehlen einer nachweisbaren Zuordnung eines am Computer erstellten Datenobjektes zum Ersteller, können zu großen wirtschaftlichen und gesellschaftlichen Schäden führen. Dasselbe gilt für den Zutritt zu geschützten Bereichen in Gebäuden. Die Benutzeridentifikation am Computer ist deshalb sehr wichtig.

Sie geschieht in den weitaus meisten Fällen dadurch, daß der Benutzer ein vereinbartes Codewort (Paßwort, persönliche Identifikationsnummer, Benutzernummer etc.) angeben muß. Dieses Codewort wird von mir im folgenden stets Paßwort genannt. Stimmt dieses Wort, wird der Benutzer vom System als derjenige identifiziert, für den er sich ausgibt. Der damit erzielbare Schutz steht und fällt mit der Geheimhaltung bzw. Nicht-Erratbarkeit des Paßwortes.

Damit ein Paßwort nicht leicht erraten werden kann, muß es einigermaßen kompliziert sein und häufig gewechselt werden.

Dies stößt jedoch auf Widerwillen beim Benutzer, denn er sollte es auswendig wissen, oder, falls er es doch aufgezeichnet hat, diese Aufzeichnung einerseits schnell zugänglich und andererseits für jede andere Person unzugänglich aufbewahren.
Hier mangelt es am Arbeitsplatz oft an der nötigen Sorgfalt. Die praktische Erfahrung zeigt, daß sich eine hundertprozentige Geheimhaltung des Paßwortes nicht durchsetzen läßt. Dies gilt ebenso im privaten Bereich. Eine 1995 durchgeführte Umfrage des Emnid-Instituts hat ergeben, daß in über zehn Prozent aller deutschen Haushalte die zur Magnetstreifen- bzw. Chipkarte gehörige PIN (persönliche Identifizierungsnummer) mehr als einem Familienmitglied bekannt ist.

Das Paßwort wirkt darüber hinaus höchstens während des Zeitraum seiner Eingabe benutzeridentifizierend. Anschließend kann der Benutzer wechseln, ohne daß dies vom Computersystem bemerkt wird. Es ist auch möglich, den Benutzer zu einer unfreiwilligen Freigabe des Paßwortes zu bewegen.

Insgesamt genügt der Paßwortschutz wegen seiner mangelnden Praktikabilität, wegen der ungenügenden Geheimhaltung und wegen der nur auf einen Zeitpunkt bezogenen Überprüfung den Sicherheitsbedürfnissen nur unzureichend.

Modernere Benutzeridentifikationssysteme arbeiten mit signifikanten biometrischen Merkmalen, z.B. dem Fingerabdruck, dem Augenhintergrund oder der Stimme. Sie besitzen aber ebenfalls spezifische Nachteile, so daß sie nur in Nischen zu Anwendung kommen.

### Aufgabe

Der Erfindung liegt die Aufgabe zugrunde, ein Personenidentifizierungssystem zu entwickeln, welches gegenüber den bekannten Systemen folgende Vorteile besitzt: Es soll
* der Person selbst unbekannt und deshalb nicht so anfällig gegenüber Geheimhaltungsverlust sein wie der Paßwortschutz
* nur mit extrem großem Aufwand nachahmbar sein
* eine permanente Benutzeridentifizierung ermöglichen
* einen hohen Grad an Identifikationssicherheit gewährleisten (hohe personelle Signifikanz)

### Stand der Technik

In diesem Kapitel wird lediglich informell erläutert, wie der derzeitige Stand der Technik ist und welche neuen Ideen dem hier vorgestellten System zu Grunde liegen. Eine genauere Betrachtung der Unterschiede findet sich in dem Kapitel "Exaktere Beschreibung der Unterschiede zum Stand der Technik" weiter unten.

### Methode der Schreibdynamik

Aus der Vergangenheit sind bereits mehrere Systeme bekannt, die ebenfalls einen Tastaturbenutzer anhand seines Tippverhaltens identifizieren. Die den hier vorgestellten Ansätzen am nächsten liegende Methode stammt von S. J. Shepherd aus dem Jahr 1995 (in "European Convention on Security and Detection; Conf. Publ. No. 408; London: Inst. of Electrical Engineers; 1995; Seiten 111-114). Diese basiert auf der Schreibdynamik und dem Tastendruck. Erstere teilt sich dabei auf in die einzelnen Aspekte Übergangs- und Anschlagdauer der einzelnen Tasten, sowie Tipprate und Fehlerfrequenz.

### Nachteile

An der Technischen Universität München wurde ein Programm entwickelt, das nach der oben genannten Methode arbeitet (Bartmann, Dieter: "Identifikation eines Tastaturbenutzers durch Analyse des Tippverhaltens". Diplomarbeit, Institut für Informatik der TU München, 1995). Ausführliche Tests haben gezeigt, daß diese Methode nicht genügend trennscharf ist. Die beiden Fehlerraten "False Rejection" und "False Acceptance" sind für eine praktische Anwendung zu groß. Dabei wurden im Programm wesentlich bessere statistische Verfahren herangezogen, als in der oben angeführten Schrift vorgeschlagen sind.

Hauptgründe für das schlechte Abschneiden:
1. Die Schreibdynamik einer Person schwankt stark. Sie hängt von der Tagesform und weiteren exogenen Einflüssen ab. Das Programm muß diese Schwankungen tolerieren, um die False Rejection Rate unterhalb eines akzeptablen Wertes zu halten. Dadurch verliert die Methode wesentlich an Trennschärfe.
2. Handelsübliche Tastaturen besitzen ein sehr grobes zeitliches Auflösungsvermögen. Deshalb sind die gemessenen Übergangszeiten so stark gerundet, daß wesentliche Information verloren geht. Das zeitliche Auflösungsvermögen liegt bei schnell schreibenden Personen in der Größenordnung der Standardabweichung der Verteilung der Übergangszeiten.

### Aufgabe angesichts dieses Standes der Technik

Neben der Schreibdynamik sind noch zusätzliche personentypische Merkmale zu finden, die über die Zeit hinweg wesentlich stabiler bleiben.

### Idee

Es sind zur Benutzeridentifizierung zeitunabhängige Merkmale heranzuziehen. Dies hat den Vorteil, daß das Problem der mangelnden Zeitauflösung der Tastatur nicht mehr auftritt.
Als zeitunabhängige Merkmale werden herangezogen:
* Die Tendenz des Benutzers, sich zu verhaspeln. Dies drückt sich unter anderem dadurch aus, daß der zweite Anschlag erfolgt, noch bevor der erste beendet ist (sog. Verschränkung oder Überholungen, siehe unten). Dabei handelt es sich nicht um Schreibfehler und ist auf dem Bildschirm auch nicht erkennbar. Es hat sich gezeigt, daß dieses Verhalten sehr grundlegend ist.
* Das Auswahlverhalten, falls mehrere Tasten zur Verfügung stehen (in erstere Linie Gebrauch der Shifttasten). Dieses Verhalten ist entscheidend dadurch geprägt, auf welche Weise eine Person das Schreiben auf der Tastatur gelernt hat und in welcher Handstellung sie schreibt (z.B. Auflage der Handballen auf dem Tisch). Auch dieses Merkmal ist äußerst konstant.
* Daneben gibt es noch weitere zeitunabhängige Merkmale, wie z.B. die Häufigkeit von Buchstabendrehern u.s.w. (siehe unten).

Ein Test mit echten Daten hat gezeigt, daß unter geschickter Heranziehung dieser personentypischen Merkmale die False Acceptance Rate weit unter ein Promille gedrückt werden kann. Dabei wurden über 100.000 Angriffsversuche durchgeführt.

Aus den angeführten Gründen geht der hier erhobene Anspruch weit über den Stand der Technik hinaus.

### LÖSUNG

### Anwendungsgebiet

Die grundlegende Idee besteht darin, daß zum einen jeder Mensch eine ihm eigene, ihn charakterisierende Art zu tippen hat, und zum anderen dieses Tippverhalten durch eine technische Vorrichtung meßbar und analysierbar ist.

Für ein Verfahren, das diese Idee in geeigneter Weise umsetzt, sind etliche Anwendungsmöglichkeiten denkbar:
* Identitätsprüfung, z.B. bei der Zutritts/Zugriffskontrolle
   Will eine Person in geschützte Bereiche eintreten oder auf geschützte Systeme zugreifen, so muß sie sich in der Regel bei dem Überwachungssystem unter einer ihr (der Person) zugeordneten Kennung anmelden. Anschließend muß sie sich anhand eines bestimmten Merkmals identifizieren, d.h. sie muß das System davon überzeugen, daß sie tatsächlich die zu der angegebenen Kennung gehörige Person ist. Derzeit übliche Verfahren hierzu sind die Eingabe von Paßwörtern bzw. PINs, die Analyse des Fingerabdrucks, des Augenhintergrunds, der Stimme, des Gesichts sowie die Überprüfung von mit der Person verbundenen Gegenständen (Chipkarte/Magnetkarte/Schlüssel/...). Die hier vorgestellte Identifizierung durch Analyse des Tippverhaltens einer Person könnte die bisherigen Verfahren ergänzen bzw. ersetzen.
* Authentifizierung eines elektronisch erstellten Dokuments
   Erstellt jemand unter zuhilfenahme einer Tastatur ein Dokument, so kann während des gesamten Erstellungsvorgangs das Tippverhalten dieser Person mit aufgezeichnet werden. Werden diese gesamten Meßdaten untrennbar und unverfälschbar zusammen mit dem Dokument abgespeichert, so ist dadurch die Identität des Schreibers direkt mit diesem verbunden. Es kann somit jederzeit überprüft werden, von wem ein derartiges Dokument tatsächlich stammt.
* laufende Überprüfung der Identität eines Tastaturbenutzers
   Bei vielen Systemen fallen während der Arbeit mit ihnen immer wieder Tastatureingaben an. So müssen beispielsweise bei herkömmlichen Computern die Befehle, der Text etc. zumindest teilweise über die Tastatur eingegeben werden. In solch einem Fall kann das Tippverhalten laufend analysiert und somit die Identität des Benutzers laufend überprüft werden. Dadurch könnten unberechtigte Zugriffe einer anderen Person während der Abwesenheit der aktuell im System angemeldeten Person erkannt und verhindert werden.
* Identifizierung einer unauthorisiert handelnden Person Versucht eine Person sich unberechtigterweise unter der Kennung einer anderen Person bei einem System anzumelden, so kann das System (falls es den Angriff erkennt) versuchen, durch Analyse des Tippverhaltens des Angreifers dessen wahre Identität herauszufinden.
* ...

Der hier und auch im folgenden immer wieder erwähnte Begriff "Tastatur" bezieht sich nicht nur auf gewöhnliche Computertastaturen. Vielmehr sei damit ganz allgemein ein Gerät bezeichnet, mit dessen Hilfe eine Person durch Drücken einer oder mehrerer Tasten oder durch Berühren eines oder mehrerer Tastenfelder Eingaben tätigt.

### Einführendes Beispiel

Im weiteren soll die Methodik der Messung und der Analyse des Tippverhaltens näher erläutert werden. Dies soll anhand des folgenden Anwendungsbeispiels erfolgen. Die gesamte Vorgehensweise kann dann leicht auf alle möglichen anderen Anwendungen und zugrundeliegenden Systeme übertragen werden.

### Beispiel

Ein Computersystem wird von mehreren Personen benutzt, die Eingaben in das System erfolgen zumindest u.a. über eine Tastatur. Bevor man mit dem System arbeiten kann, muß man sich bei ihm unter einer Kennung anmelden. Jeder Person ist genau eine Kennung zugeordnet, mit der auch die jeweiligen Rechte des Benutzers verbunden sind. Nach der Eingabe der Kennung muß sich der Benutzer dem System gegenüber identifizieren. Dies soll mit Hilfe des personentypischen Merkmals "Tippverhalten" erfolgen.

### Lernvorgang

Damit das System die einzelnen Benutzer auf diese Art überhaupt identifizieren kann, muß ihm zunächst einmal bekannt gemacht werden, wie die verschiedenen Personen tippen. Dies geschieht in einer sogenannten Lernphase, die in unserem Beispiel wie folgt ablaufen soll:
Eine vom System bereits identifizierte Person, die die entsprechenden Berechtigungen besitzt, weist das System an, das Tippverhalten eines bestimmten Benutzers X zu lernen. Dazu muß dieser Benutzer X einen vom System auf dem Bildschirm ausgegebenen längeren Text (in der Regel mehrere Absätze lang) abtippen. Das System führt dabei geeignete Messungen durch und wertet schließlich die gemachten Beobachtungen in der weiter unten beschriebenen Weise aus. So erhält es ein für X typisches Referenzmuster. Mit dessen Hilfe kann in zukünftigen Identifizierungsvorgängen dieser Benutzer immer wieder an seinem Tippverhalten vom System erkannt werden. Das Referenzmuster wird vom System in Verbindung mit der Kennung der Person X dauerhaft abgespeichert. Nach Abschluß der Lernvorgänge für alle Benutzer liegt somit dem System zu jeder Kennung genau ein Referenzmuster, und zwar das des zugehörigen Benutzers, vor.

### Identifizierung

Bei jeder Anmeldung am System muß sich ein Benutzer Y - wie oben bereits erwähnt - dem System gegenüber identifizieren. Dies soll in dem hier dargelegten Beispiel wie folgt vor sich gehen:
Nachdem der Benutzer Y die Kennung eingegeben hat, unter der er sich beim System anmelden will, wird er dazu aufgefordert, einen kurzen, auf dem Bildschirm angezeigten Text (in der Regel wenige Zeilen lang) abzutippen. Dabei führt das System wieder entsprechende Messungen durch. Die so gewonnenen Beobachtungen vergleicht es dann mit dem zu der angegebenen Kennung gehörigen Referenzmuster M und trifft auf der Basis dieses Vergleichs eine der beiden möglichen Entscheidungen: Liegt eine deutliche Übereinstimmung zwischen dem gerade beobachteten Tippverhalten von Y und dem im Referenzmuster M niedergelegten Verhalten vor, so wird Y vom System als die zur angegebenen Kennung gehörige Person identifiziert. Andernfalls bricht das System den Anmeldevorgang ab.

### Verallgemeinerungen

Das hier angeführte Beispiel stellt nur eine sehr einfache von vielen denkbaren Möglichkeiten dar, die zugrundeliegende Idee "Identifizierung einer Person anhand ihres Tippverhaltens" in einem System umzusetzen. Insbesondere können der Lernvorgang und die Identifizierung in vielerlei Hinsicht abgewandelt werden. So sind z.B. die folgenden Veränderungen denkbar:
* kein oder nur teilweise vorgegebener Text; der Rest muß als Freitext vom Benutzer eingetippt werden
* Aufteilung des Lernvorgangs auf mehrere "Sitzungen"
* laufende Messungen bei allen Tastatureingaben und damit verbunden laufende Überprüfung der Identität eines Benutzers
* Einführung unterschiedlicher Sicherheitsstufen (gleich nach der Anmeldung dürfen nur unkritische Aktionen vorgenommen werden, der Zugriff auf sensitivere Befehle und Daten wird erst dann gestattet, wenn der Benutzer anhand der laufenden Eingaben auf einem sehr hohen Sicherheitsniveau identifiziert werden konnte)
* ...

### Grundlagen

### Definitionen

In diesem Abschnitt sollen einige für das Weitere wichtige Begriffe definiert werden.

### Lerntext

Dies ist der von einem Benutzer während des Lernvorgangs eingegebene Text. In dem hier verwendeten Beispiel ist dieser Text gesamt vom System vorgegeben.

### Testtext

Dies ist der von einem Benutzer während eines Identifizierungsvorgangs eingegebene Text. In dem hier verwendeten Beispiel ist dieser Text gesamt vom System vorgegeben. Er kann für verschiedene Identifizierungsvorgänge unterschiedlich sein.

### Anmelder

Mit Anmelder wird diejenige Person bezeichnet, die sich bei dem System anmeldet. Insbesondere werden die im Verlauf der zugehörigen Identifizierung auftretenden Tastenanschläge alle vom Anmelder vorgenommen.

### Behaupteter

Jedem Benutzer des Systems ist genau eine Kennung zugeordnet. Meldet sich eine Person beim System an, so muß sie dazu eine Kennung eingeben. Sie behauptet dadurch dem System gegenüber, die mit dieser Kennung verbundene Person zu sein.
Mit Behaupteter wird im folgenden immer diejenige Person bezeichnet, die zu der bei einem Anmeldevorgang eingegebenen Kennung gehört. Diese muß nicht zwingend mit derjenigen Person identisch sein, die die Kennung eingegeben hat.

### Berechtigter

Stimmen bei einem Anmeldevorgang Anmelder und Behaupteter überein, so wird der entsprechende Benutzer auch als Berechtigter bezeichnet. Er hat sich also unter seiner eigenen Kennung angemeldet.

### Unberechtigter

Stimmen bei einem Anmeldevorgang Anmelder und Behaupteter nicht überein, so wird der Anmelder auch als Unberechtigter bezeichnet. Er hat sich also unter einer fremden Kennung angemeldet.

### Gemessene Daten

Dieser Abschnitt erläutert die während des Lernvorgangs und während der Identifizierung vorgenommenen Messungen anhand der beispielhaften Eingabe des Wortes "Hund".
Die Eingabe von "Hund" kann durch die folgenden Aktionen geschehen (es sind auch andere Möglichkeiten denkbar):
1. Drücken der Taste "linkes_Shift"
2. Drücken der Taste "h"
3. Loslassen der Taste "h"
4. Loslassen der Taste "linkes_Shift"
5. Drücken der Taste "u"
6. Loslassen der Taste "u"
7. Drücken der Taste "n"
8. Loslassen der Taste "n"
9. Drücken der Taste "d"
10. Loslassen der Taste "d"
   Um die weiteren Erläuterungen übersichtlicher gestalten zu können, wird die folgende symbolische Schreibweise eingeführt: Das Drücken einer Taste wird durch Taste↓, das Loslassen einer Taste durch Taste↑ dargestellt. Die oben angeführten zehn Ereignisse lassen sich damit kurz wie folgt schreiben:
   linkes_Shift ↓ h↓ h↑ linkes_Shift↑ u↓ u↑ n↓ n↑ d↓ d↑

Obige Eingabe des Wortes "Hund" ist durch die zeitliche Abfolge dieser zehn Elementarereignisse charakterisiert. Als Elementarereignis soll im folgenden immer das Drücken oder das Loslassen einer beliebigen Taste verstanden werden. Für die Analyse des Tippverhaltens einer Person genügt es, die zeitliche Abfolge der von ihr hervorgerufenen Elementarereignisse zu erfassen. Das bedeutet, daß zu jedem Elementarereignis der Zeitpunkt dessen Auftretens gemessen werden muß.
Die gesamte Information läßt sich somit durch die folgenden drei Meßgrößen erfassen:
1. Ereignisart: { ↓, ↑ } als Wertebereich Die Ereignisart zeigt an, ob eine Taste gedrückt oder losgelassen wurde
2. Taste: { a, b, c, ..., linkes_Shift, rechtes_Shift, ... } als Wertebereich (z.B. 102 verschiedene Tastenbezeichnungen)
   Die Meßgröße Taste zeigt an, welche Taste gedrückt bzw. losgelassen wurde
3. Zeitpunkt: positive reelle Zahlen als Wertebereich Der Zeitpunkt gibt an, zu welchem Zeitpunkt die Taste gedrückt bzw. losgelassen wurde

Jedes Elementarereignis führt zu einer eigenen Beobachtung (einer Messung dieser drei Meßgrößen). Die gesamte Menge aller Beobachtungen, die während des Tippens eines gewissen Textes (z.B. des Lern- oder des Testtextes) gemacht werden, bilden das sogenannte Beobachtungsfeld dieses Tippvorgangs. In unserem Beispiel könnte dies etwa wie folgt aussehen:

| Ereignisart | ↓ | ↓ | ↑ | ↑ | ↓ | ↑ | ↓ | ↑ | ↓ | ↑ |
|---|---|---|---|---|---|---|---|---|---|---|
| Taste | linkes_Shift | h | h | linkes_Shift | u | u | n | n | d | d |
| Zeitpunkt | 0,000 | 0,024 | 0,257 | 0,301 | 0,388 | 0,522 | 0,621 | 0,698 | 0,984 | 1,131 |

Alle weiteren Berechnungen und Analysen werden auf der Basis derartiger Beobachtungsfelder durchgeführt.

### Erweiterung

Zusätzlich zu den hier angegebenen Meßgrößen kann gegebenenfalls noch der Anschlagdruck bei der Betätigung der einzelnen Tasten mit berücksichtigt werden. Aus den einzelnen Kurven (für jede Taste eine), die die auf die jeweilige Taste ausgeübte Kraft in ihrem zeitlichen Verlauf beschreiben, können einzelne skalare Maßzahlen für den Druck berechnet werden. Denkbar wären hier beispielsweise Mittelwert, Maximalwert oder Integral über die Kurve jeweils bezogen auf einen einzelnen Anschlag. Am einfachsten ist es, sich hier auf eine derartige Maßzahl zu beschränken, deren Wert jeweils beim Loslassen einer Taste zu berechnen und ihn schließlich als vierte Komponente in den Beobachtungsvektor mit aufzunehmen. In diesem Fall könnte das Beobachtungsfeld unseres Beispiels folgende Gestalt annehmen:

| Ereignisart | ↓ | ↓ | ↑ | ↑ | ↓ | ↑ | ↓ | ↑ | ↓ | ↑ |
|---|---|---|---|---|---|---|---|---|---|---|
| Taste | linkes_Shift | h | h | linkes_Shift | u | u | n | n | d | d |
| Zeitpunkt | 0,000 | 0,024 | 0,257 | 0,301 | 0,388 | 0,522 | 0,621 | 0,698 | 0,984 | 1,131 |
| Druckmaßzahl | - | - | 23,5 | 55,6 | - | 19,8 | - | 50,3 | - | 60,3 |

### Einschränkungen

Es ist auch denkbar, nur eine Teilmenge der angeführten Meßgrößen zu erfassen.
Läßt man z.B. die Ereignisart weg (das impliziert, daß dann nur die Anschlagzeitpunkte, nicht aber die Loslaßzeitpunkte gemessen werden), so stützen sich alle weiteren Analysen auf die Übergangsdauern von einem Tastenanschlag zum nächsten.

Mißt man hingegen nur die Ereignisart und die Taste, so kann man lediglich die Tastenwahl und die Reihenfolge der beobachteten Elementarereignisse betrachten. Untersuchungen haben ergeben, daß darin bereits einige sehr personentypische Merkmale enthalten sind. Bei genügend langen Texten lassen sich auch ohne die Messung der Zeitpunkte Identitätstests auf einem hohen Sicherheitsniveau durchführen. Dies kommt auch dadurch zum Ausdruck, daß viele der weiter unten beschriebenen Kenngrößen die Zeit überhaupt nicht mit berücksichtigen. Zieht man den Anschlagdruck ebenfalls mit hinzu, so ergeben sich noch einige weitere sinnvolle Meßgrößen-Kombinationen.

### Technische Geräte

Die hier vorgestellte Idee kann mit Hilfe der unterschiedlichsten technischen Geräte realisiert werden. Verzichtet man auf die Druckmessung, so könnte man für etliche Anwendungen beispielsweise ganz auf Standardgeräte der Computertechnologie zurückgreifen. Denkbar sind aber auch speziell angefertigte Geräte, bei denen z.B. die Zeit- und/oder Druckmessung in der Tastatur integriert sind. Diese können evtl. zusätzlich noch mit Speicher- und/oder Rechenfähigkeit ausgestattet sein. Des weiteren erscheint für einige Anwendungen die Einbeziehung von Mikroprozessorchipkarten sinnvoll zu sein. Auf ihnen könnte man beispielsweise die personentypischen Muster speichern und evtl. sogar die Identifizierung selbst durchführen.

### Analyse der Meßdaten

Als Rohdaten stehen dem System die oben beschriebenen Beobachtungsfelder zur Verfügung. Wie diese weiter analysiert werden können, um schließlich personentypische Merkmale zu erhalten, ist Thema dieses Kapitels.

### Kenngrößen

Um das Tippverhalten einer Person zu analysieren, kann man aus den aufgenommenen Beobachtungen eine Reihe verschiedener Kenngrößen berechnen. Prinzipiell ist eine Kenngröße einfach ein, mit Hilfe einer vorgegebenen Rechenvorschrift aus einem Beobachtungsfeld berechneter Wert. Es sind somit beliebig viele verschiedene Kenngrößen denkbar. Sinnvollerweise versucht man sich jedoch auf solche zu beschränken, die möglichst viel über das Tippverhalten einer Person aussagen.

Ein Beispiel für eine Kenngröße wäre etwa die Anzahl, wie oft der Schreiber in dem Beobachtungszeitraum die Taste "s" gedrückt hat. Diese Größe ist zwar sicherlich sehr einfach aus dem Beobachtungsfeld zu ermitteln, dürfte jedoch im allgemeinen nur äußerst wenig über die Identität des Schreibers aussagen. Im folgenden werden etliche Beispiele für Kenngrößen angeführt, die jeweils einen gewissen Aspekt des Tippverhaltens untersuchen und auch tatsächlich personentypisch sein können.

### Gebrauch der Shifttasten, Tastenwahl

Aus dem Beobachtungsfeld kann leicht ermittelt werden, wie oft der Schreiber die linke und wie oft die rechte Shifttaste benutzt hat, um beispielsweise ein großes 'A' einzugeben. Eine mögliche Kennzahl wäre somit die relative Häufigkeit des Gebrauchs der linken Shifttaste bei der Eingabe eines großen 'A'.

### Konkretes Beispiel :

In dem Beobachtungsfeld tritt einmal der Fall "'A' mit der linken Shifttaste geschrieben" und neunmal der Fall "'A' mit der rechten Shifttaste geschrieben" auf. Der Wert der Kenngröße ist dann K = 10%.

Entsprechend lassen sich für alle anderen Tasten, mit denen durch Großschreibung eine Eingabe getätigt werden kann, analoge Kenngrößen ermitteln. Zusammengenommen charakterisieren sie das Verhalten des Schreibers bei der Großschreibung.

Auf dieselbe Art lassen sich auch Kennzahlen für andere Tasten mit Wahlmöglichkeit berechnen. So kann beispielsweise auf einer gewöhnlichen Computertastatur eine '1' sowohl auf dem Haupttastaturfeld als auch auf dem Nummernfeld eingegeben werden. Eine mögliche Kennzahl für die Auswahl der '1' ist wieder die beobachtete relative Häufigkeit. Hierbei sollten jedoch einzeln auftretende Ziffern und längere Zahlenkolonnen unterschieden werden.

### Fehleranfälligkeit

Ebenfalls personentypisch ist die Anzahl der Tippfehler bezogen auf die Länge des eingegebenen Textes. Eine einfach zu bestimmende Kenngröße hierfür ist beispielsweise die relative Häufigkeit der Zeichen 'Backspace' und 'Delete' in Bezug auf die Gesamtzahl der eingegebenen Zeichen. Ist dem System der dem Beobachtungsfeld zugrunde liegende Vorlagetext bekannt, so kann es auch die tatsächliche Häufigkeit der gemachten Schreibfehler berechnen. Zusammen mit obiger auf dem Auftreten der Korrekturtasten beruhender Kenngröße ließe sich schließlich sogar die Zahl der vom Schreiber nicht entdeckten Tippfehler ermitteln. All diese Kenngrößen enthalten eine bestimmte Information über den Aspekt "Fehleranfälligkeit" des Schreibers.

### Verschränkungen

In den allermeisten Fällen sind die Benutzer des Systems zumindest einigermaßen an den Umgang mit der Tastatur gewohnt. Sie müssen demnach nicht jede Taste von neuem suchen, um diese dann zu drücken und anschließend die nächste Taste wieder zu suchen. Vielmehr entsteht ein gewisser Schreibfluß. Dabei kann es sehr leicht vorkommen, daß man die zweite Taste drückt, noch bevor man die erste losgelassen hat. Beispielsweise ist mit jeder der beiden unten angegebenen Folgen von Elementarereignissen die korrekte Eingabe des Wortes "er" verbunden:
Folge 1 (ohne Verschränkung) : e↓ e↑ r↓ r↑
Folge 2 (mit Verschränkung): e↓ r↓ e↑ r↑

Bei der zweiten Folge tritt allerdings eine sogenannte Verschränkung auf, d.h. das Drücken der Taste 'r' erfolgt in diesem Fall noch bevor die Taste 'e' wieder losgelassen wurde. Trotzdem wird offensichtlich auch hier das Wort "er" eingegeben, da der Druck der Taste 'e' vor dem der Taste 'r' erfolgt.

Untersuchungen haben gezeigt, daß das Auftreten von Verschränkungen in hohem Maße personentypisch ist. Sie kommen in der Regel bei jedem vor, der einigermaßen an den Umgang mit einer Tastatur gewohnt ist; die jeweiligen Häufigkeiten für die verschiedenen Tastenkombinationen sind jedoch von Person zu Person unterschiedlich.

Eine für die Untersuchung von Verschränkungen geeignete Kenngröße ist die relative Häufigkeit mit der beispielsweise die Tastenkombination 'e''r' ohne Verschränkung in dem Beobachtungsfeld auftritt. Die Bezugsgröße ist dabei die Gesamtzahl der beobachteten 'e''r'-Kombinationen. In entsprechender Weise kann auch für alle anderen Tastenkombinationen jeweils die analoge Kenngröße ermittelt werden. Bereits in den Kennzahlen zu den dreißig bis fünfzig häufigsten Kombinationen steckt ein sehr hohes Maß an personenidentifizierender Information.

### Anschlagdauer

Ebenfalls charakteristisch für eine Person ist die Zeit, wie lange sie die einzelnen Tasten gedrückt hält. Diese hängt nicht unbedingt von der gesamten Schreibgeschwindigkeit der Person ab, sondern ist deutlich von dieser zu trennen. Eine eher langsam schreibende Person kann auf einzelnen Tasten eine deutlich geringere durchschnittliche Anschlagdauer haben, als ein äußerst schneller Schreiber.
Im folgenden soll die Ermittlung von geeigneten Kennzahlen am Beispiel der Anschlagdauer der Taste 'e' näher erläutert werden. Wurde die Taste 'e' im Verlauf der Messung beispielsweise 100 mal gedrückt, so können aus dem Beobachtungsfeld leicht die 100 zugehörigen Anschlagdauern sowie die zugehörige empirische Verteilungsfunktion ermittelt werden. Diese Verteilungsfunktion kann mit Hilfe eines geeigneten statistischen Modells durch eine parametrisierte Verteilungsfunktion angenähert werden. Die Schätzer der zugehörigen Verteilungsparameter lassen sich analytisch aus den gegebenen 100 beobachteten Anschlagdauern berechnen. Sie bilden die die Anschlagdauer von 'e' beschreibenden Kenngrößen.

### Konkretes Beispiel :

Nimmt man als statistisches Modell an, daß die Anschlagdauer der Taste 'e' mit den Parametern µ und σ2 normalverteilt ist, so erhält man für 'e' zwei Kenngrößen:
Die statistischen Standardschätzer für µ und σ2. Diese sind der Mittelwert und die empirische Varianz.
In entsprechender Weise lassen sich die analogen Kennzahlen auch für alle anderen Tasten ermitteln. Dabei ist es sinnvoll, immer dasselbe statistische Modell zugrunde zu legen. Dieses wird in der Regel etwas komplizierter als das im Beispiel angegebene sein, was jedoch an der prinzipiellen Vorgehensweise nichts ändert.
Die Gesamtheit dieser Kennzahlen für alle Tasten beschreiben den Aspekt "Anschlagdauer" des Tippverhaltens des Schreibers. Sie enthalten ebenfalls ein hohes Maß an personentypischer Information.

### Übergangsdauer

In ähnlicher Weise wie die Anschlagdauern der einzelnen Tasten lassen sich auch die Übergangsdauern der verschiedenen Tastenkombinationen analysieren. Mit Übergangsdauer ist dabei die Zeitspanne vom Drücken einer Taste bis zum Drücken der darauffolgenden Taste gemeint. Sie hängt im Gegensatz zur Anschlagdauer direkt mit der Schreibgeschwindigkeit einer Person zusammen. Ein schneller Schreiber hat in der Regel zumindest bei den häufigeren Tastenkombinationen wesentlich kürzere mittlere Übergangsdauern als ein langsamer Schreiber. Die Unterschiede von Person zu Person sind jedoch noch wesentlich vielschichtiger: Auch zwei in der gesamten Schreibgeschwindigkeit sehr ähnliche Benutzer können, wenn man die einzelnen Tastenkombinationen betrachtet, sehr unterschiedliche Übergangsdauern aufweisen. Je nach Veranlagung fallen dem einen gewisse Anschlagfolgen wesentlich leichter oder sind besser eingeschliffen als bei dem anderen und umgekehrt.

Wie man nun zu geeigneten, die Übergangsdauern charakterisierenden Kenngrößen kommt, soll im folgenden beispielhaft an der Tastenkombination 'e''r' erläutert werden. Die prinzipielle Vorgehensweise ist wieder die gleiche wie bei den Anschlagdauern. Wurden beispielsweise im Verlauf der Messung die Tasten 'e' und 'r' 20 mal direkt hintereinander in dieser Reihenfolge gedrückt, so bilden die zugehörigen 20 Übergangsdauern die Berechnungsgrundlage. Sie können aus dem Beobachtungsfeld leicht ermittelt werden. Man versucht nun wieder mit Hilfe eines geeigneten statistischen Modells die empirische Verteilungsfunktion der beobachteten Zeiten durch eine parametrische anzunähern. Die Schätzwerte der zugehörigen Verteilungsparameter bilden dann die Kenngrößen. Das hier zugrunde gelegte statistische Modell kann durchaus von dem für die Analyse der Anschlagdauern verwendeten abweichen. Wieder lassen sich in entsprechender Weise auch die analogen Kennzahlen für alle anderen Tastenkombinationen ermitteln. Sinnvollerweise wird man sich jedoch auf die wichtigsten Kombinationen beschränken. Die Gesamtheit der entsprechenden Kennzahlen beschreiben schließlich den Aspekt "Übergangsdauer" des Tippverhaltens des Schreibers. Anschlagdruck

Wird bei den durchgeführten Messungen der Tastendruck ebenfalls mit erfaßt, so lassen sich auch hieraus eine Reihe von Kenngrößen berechnen. Die Vorgehensweise ist dabei zu der bei den Anschlagdauern identisch. Es werden wieder die einzelnen Tasten getrennt voneinander betrachtet und die zugehörigen empirischen Verteilungsfunktionen der beobachteten Druckmessungen durch parametrische Verteilungen angenähert. Der einzige Unterschied besteht im Prinzip in dem zugrunde gelegten statistischen Modell. Außerdem sind, falls verschiedene Druckmeßgrößen erfaßt worden sind (z.B. Mittelwert und Maximalwert), diese auch getrennt voneinander zu analysieren.

Wieder enthält die Gesamtheit der so ermittelten Kenngrößen charakteristische Informationen über das "Anschlagdruck-Verhalten" des Schreibers.

### Anlaufphase und Prägungen

Wie anhand dieser sechs Beispiele näher erläutert wurde, lassen sich aus einem Beobachtungsfeld eine ganze Reihe unterschiedlicher Kenngrößen berechnen. Jede einzelne von ihnen sagt etwas über die verschiedenen Eigenschaften des Schreibers aus, was dessen Tippverhalten angeht.
Neben den so, aus dem gesamten Beobachtungsfeld gewonnenen Charakteristika gibt es noch andere Aspekte des Tippverhaltens, die in gewisser Weise eine Ebene höher anzusiedeln sind. Zwei Beispiele hierfür sind die Anlaufphase und die sogenannten Prägungen; sie werden im folgenden kurz erläutert.

Beginnt man nach einer kurzen Pause (es genügen wenige Minuten, in denen man nichts getippt hat) damit, einen längeren Text einzugeben, so dauert es für gewöhnlich eine gewisse Zeit, bis man in seinen normalen Schreibfluß gefunden hat. Diese Zeitspanne wird hier als Anlaufphase bezeichnet. Sie ist in der Regel durch eine erhöhte Fehleranfälligkeit und einen ungleichmäßigeren Schreibrhythmus gekennzeichnet. Die gesamte Schreibgeschwindigkeit ist nicht notwendigerweise niedriger. Sowohl die Dauer der Anlaufphase, als auch deren Ausprägungsgrad und die Art der einzelnen Ausprägungen sind weitere personentypische Aspekte des Tippverhaltens.

Als Prägungen werden im folgenden einzelne Wörter und Tastenfolgen bezeichnet, die von einer Person besonders häufig eingegeben werden. Beispiele hierfür sind der Name und die Kennung der Person, sowie evtl. spezielle Kommandos oder Syntaxelemente einer Programmiersprache. Die Prägungen sind somit im allgemeinen von Person zu Person unterschiedlich.

Sie sind für die Analyse des Tippverhaltens von besonderem Interesse, weil sie in der Regel anders geschrieben werden, als die entsprechenden einzelnen Zeichen bzw. Zeichenkombinationen. Sie müssen demnach eigenständig analysiert werden, um zum einen nicht die Kenngrößen für den "normalen Text" zu verfälschen und um zum anderen die in ihnen steckende zusätzliche Information ebenfalls zu berücksichtigen.

Warum diese beiden Aspekte, die Anlaufphase und die Prägungen, eine Ebene über den oben angeführten Eigenschaften anzusiedeln sind, wird ersichtlich, wenn man die zugehörigen Kenngrößen betrachtet. Sowohl die Anlaufphase als auch die Prägungen lassen sich nämlich ebenfalls durch die oben beschriebenen Kenngrößen charakterisieren. Der einzige Unterschied besteht darin, daß man nun nicht das gesamte Beobachtungsfeld, sondern lediglich Teile davon zu deren Berechnung heranzieht. So werden beispielsweise als Grundlage für die Ermittlung der die Prägung "printf" beschreibenden Kenngrößen lediglich diejenigen Beobachtungen verwendet, die auch in direktem Zusammenhang mit dem Schreiben dieser Zeichenfolge stehen. Entsprechend könnte man für die Anlaufphase z.B. nur die ersten 300 Anschläge berücksichtigen.

Insgesamt erhält man also auch für derartige höherstehende Aspekte des Tippverhaltens eine Reihe von charakterisierenden Kenngrößen. Dabei kann auf die grundlegenden Ideen zurückgegriffen werden.

### Aspekte des Tippverhaltens

In den vorangegangenen Abschnitten wurde anhand etlicher Beispiele erläutert, wie man die einzelnen Aspekte des Tippverhaltens mit Hilfe verschiedener Kenngrößen analysieren kann. Dabei sind nahezu beliebig viele unterschiedliche Berechnungsvorschriften zur Gewinnung sinnvoller Kenngrößen denkbar, die jedoch alle eine Gemeinsamkeit aufweisen: Die erhaltenen Größen charakterisieren jede für sich irgendeine Eigenart im Tippverhalten des Schreibers. An dieser Stelle werden deshalb nochmals die wichtigsten Aspekte des Tippverhaltens aufgeführt.
1. Schreibrhythmus (zeitlicher Aspekt)
   * Anschlagdauern
   * Übergangsdauern
2. Anschlagdruck
3. Anschlagfolge
   * Tastenauswahl (z.B. Shifttastengebrauch)
   * Verschränkungen
4. Fehlerverhalten
   * Häufigkeiten (bemerkte und unbemerkte Tippfehler)
   * personenspezifische Tippfehler (z.B. Buchstabendreher, spezielle Wörter, ...)
   * Korrekturverhalten
5. Anlaufphase
   * Ausprägungsgrad
   * Art der Ausprägungen
   * Dauer der Anlaufphase
6. Prägungen

Insgesamt muß man sich schließlich für eine gewisse Anzahl an Kenngrößen entscheiden (mindestens eine, in der Regel jedoch etliche Hundert). Zusammengenommen werden diese im folgenden immer als Kenngrößenvektor bezeichnet.

### Muster

In einem letzten Schritt kann man nun aus dem Kenngrößenvektor das personentypische Muster ermitteln, das im weiteren auch als Referenzmuster für diese Person oder als psychometrisches Muster dieser Person bezeichnet wird. Dieses Muster besteht aus dem besagten Kenngrößenvektor und einem zusätzlichen Gewichtsvektor derselben Dimension. Es wird also lediglich jede Kenngröße noch mit einem bestimmten Gewicht, das zwischen Null und einem festen Höchstwert liegt, versehen.

Die der Musterberechnung zugrunde liegende Idee ist die folgende: Betrachtet man das Tippverhalten einer Person, so wird es in der Regel zum großen Teil mit dem vieler anderer übereinstimmen. So benutzt beispielsweise jeder gelernte Schreibmaschinenschreiber grundsätzlich die rechte Shifttaste, um ein großes 'A' einzugeben. Andererseits hat aber auch jede Person gewisse Eigenarten, durch die sie sich vom Schreibverhalten anderer unterscheidet. Ziel der Musterberechnung ist es nun, gerade diese charakteristischen Eigenschaften ausfindig zu machen und die zugehörigen Kenngrößen schließlich mit entsprechend hohen Gewichten zu versehen. Dadurch wird die spätere Identifizierung eines Berechtigten bzw. entsprechend die Ablehnung eines Unberechtigten erheblich erleichtert. Die drei wichtigsten Methoden, mit deren Hilfe die charakteristischen Merkmale erkannt werden können, sind die folgenden.
1. Vergleich mit dem empirisch ermittelten "Durchschnittsschreibverhalten"
   Durch Analyse des Schreibverhaltens einer größeren Zahl von Personen lassen sich leicht Standardwerte für die einzelnen Kenngrößen ermitteln, d.h. Werte oder sogar Intervalle für die betrachteten Größen, die das Tippverhalten der meisten Probanden widerspiegeln. Liegt nun eine Kenngröße des gerade untersuchten Vektors außerhalb des entsprechenden Intervalls bzw. relativ weit von dem entsprechenden Normalwert entfernt, so deutet dies auf eine charakteristische Eigenart hin. Einer derartigen Kenngröße sollte dementsprechend ein großes Gewicht zugeordnet werden.
2. Vergleich mit den Kenngrößenvektoren der anderen dem System bekannten Personen
   Liegen dem System bereits einige Kenngrößenvektoren anderer Personen vor, so lassen sich mit deren Hilfe ebenfalls einige Eigenarten im Schreibverhalten der augenblicklich untersuchten Person feststellen. Weicht eine Kenngröße von allen oder zumindest den meisten entsprechenden Werten der anderen Personen stark ab, so deutet dies wieder auf ein personentypisches Merkmal hin. Auf diese Art und Weise kann eine besonders hohe Trennschärfe zwischen den dem System bekannten Personen erreicht werden.
3. Berechnung der Varianzen der einzelnen Kenngrößen
   Die dritte hier vorgestellte Methode bezieht sich nicht auf Vergleichswerte, sondern betrachtet lediglich die Konstanz im Schreibverhalten der untersuchten Person. Demnach ist es sinnvoll, eine Kenngröße, die nur sehr geringen Schwankungen unterworfen ist, wesentlich höher zu gewichten als eine, die bei dem Schreiber mal diesen und mal jenen Wert annehmen kann. Ein Maß für diese Konstanz bieten die im Zusammenhang mit der Berechnung der einzelnen Kenngrößen auftretenden Varianzen.

### Gesamtablauf

In diesem Kapitel wird beschrieben, wie sich die bisher vorgestellten Methoden und Konzepte zu einer geschlossenen Anwendung zusammenfügen lassen. Als Grundlage dazu dient weiterhin das angegebene einführende Beispiel.

### Lernvorgang

Während der Benutzer den vorgegebenen Text abtippt, führt das System die oben beschriebenen Messungen durch und erhält dadurch das Beobachtungsfeld. Aus diesem werden dann die vorher festgelegten Kenngrößen ermittelt. Liegen dabei für eine Größe keine oder zu wenig Beobachtungen vor, so wird diese übergangen und im weiteren nicht mehr berücksichtigt. Aus dem so erhaltenen Kenngrößenvektor wird schließlich, z.B. mit Hilfe einer der oben beschriebenen Methoden oder einer Kombination davon, das Referenzmuster berechnet.

Was nun im einzelnen alles vom System dauerhaft abgespeichert werden muß, hängt u.a. von dem verwendeten Identifizierungsverfahren ab. Es kann das gesamte Beobachtungsfeld, der Kenngrößenvektor oder das Referenzmuster sowie jegliche Kombination dieser drei Datensätze gespeichert werden. Im einfachsten Fall genügt es jedoch, sich das Referenzmuster zu merken.
Neben einem solch einfachen Ablauf für das Lernverfahren sind noch viele andere Möglichkeiten denkbar. Insbesondere kann es sinnvoll sein, den gesamten Lernvorgang adaptiv zu gestalten. Dazu könnte man explizit immer wieder einen neuen Lerndurchgang anstoßen oder implizit die bei der Identifizierung gewonnenen Beobachtungsfelder verwenden. Dabei dürften natürlich nur diejenigen Versuche Berücksichtigung finden, bei denen der Benutzer eindeutig vom System identifiziert werden konnte. Einen völlig anderen Aspekt der Adaptivität erhält man, wenn man immer nach der Aufnahme eines neuen Benutzers die Gewichtungen der Kenngrößenvektoren aller anderen Benutzer neu durchführt. Dadurch ließe sich die Trennschärfe innerhalb der Benutzergruppe optimieren.

### Identifizierung

Das eigentliche Ziel der gesamten Anwendung ist die Identifizierung. Das System soll auf einem bestimmten Sicherheitsniveau dazu in der Lage sein, berechtigte Anmelder von unberechtigten anhand ihres Tippverhaltens zu unterscheiden.

Der erste Schritt des Identifikationsvorgangs ist das Erfassen der verschiedenen Meßgrößen, während der Anmelder A den Testtext abtippt. Dadurch erhält das System ein Beobachtungsfeld F_{A}. Für die anliegende Entscheidung, ob A mit dem Behaupteten B identisch ist, stehen dem System die von ihm im Rahmen des Lernvorgangs von B abgespeicherten Daten zur Verfügung: das Beobachtungsfeld F_{B}, der Kenngrößenvektor K_{B} sowie das Referenzmuster M_{B}
Für die Vorgehensweise bei der letztendlichen Entscheidungsfindung sind nun einige, grundsätzlich verschiedene Ansätze denkbar, die evtl. auch miteinander kombiniert werden können. Im folgenden werden die drei wichtigsten Methoden näher erläutert:
1. Direkter Mustervergleich
   Das naheliegendste und einfachste Verfahren besteht darin, aus dem Beobachtungsfeld F_{A} in zum Lernvorgang analoger Weise einen Kenngrößenvektor K_{A} zu berechnen und diesen mit dem Muster M_{B} zu vergleichen. Der Vergleich könnte beispielsweise durch die Berechnung des gewichteten euklidischen Abstands der beiden Kenngrößenvektoren K_{A} und K_{A} erfolgen (gewichtet bedeutet dabei eine durch die Komponenten des Gewichtsvektors festgelegte lineare Skalierung der einzelnen Dimensionen). Der Nachteil dieses Verfahrens besteht in der dazu nötigen Mindestlänge des Testtextes. Ist dieser nämlich zu kurz, so können aus dem zugehörigen Beobachtungsfeld viele der Kenngrößen nicht mehr oder nur unzureichend berechnet werden. Ein sinnvoller Vergleich ist dann nicht mehr möglich.
2. Vergleich des Beobachtungsfeldes F_{A} mit dem Referenzmuster M_{B}
   Dieses Verfahren kann auch bei sehr kurzen Testtextlängen noch gut eingesetzt werden, da es auf die Berechnung der verschiedenen Kenngrößen aus dem Beobachtungsfeld F_{A} verzichtet. Statt dessen wird das Beobachtungsfeld F_{A} direkt mit dem Muster M_{B} verglichen. Es wird eine Art Wahrscheinlichkeitsmaß dafür berechnet, daß diejenige Person, deren Schreibverhalten durch M_{B} charakterisiert ist, die gemessenen Beobachtungen F_{A} hervorruft. Für einen Berechtigten wird diese Maßzahl in der Regel relativ hoch, für einen Unberechtigten relativ niedrig ausfallen. Durch das geforderte Sicherheitsniveau wird schließlich der Schwellenwert für die letztendliche Entscheidung festgelegt.
3. Direkter Vergleich der Beobachtungsfelder

Die letzte hier vorgestellte Methode verzichtet auf jeglichen theoretischen Hintergrund. Mit Hilfe nichtklassischer Ansätze, wie z.B. einem neuronalen Netz, ist es durchaus möglich, die beiden Beobachtungsfelder F_{A} und F_{B} in gewisser Weise direkt miteinander zu vergleichen. Eines der Hauptprobleme, die variable Anzahl der Einzelbeobachtungen in F_{A} und F_{B} auf eine feste Zahl an Eingabeneuronen abzubilden, läßt sich beispielsweise durch die sogenannte topologische Codierung lösen. Die mit Hilfe eines derartigen Verfahrens erzielten Ergebnisse hängen sehr stark von den verwendeten Lernalgorithmen, sowie von den zugrunde liegenden Lerndaten ab. Dennoch lassen sich sicherlich auch auf dieser Idee, die Beobachtungsfelder direkt miteinander zu vergleichen, basierende Identifikationssysteme realisieren.

Diese drei kurzen Absätze sollen lediglich verdeutlichen, daß durchaus mehrere Verfahren, die sich grundlegend voneinander unterscheiden, für die Realisierung des Identifikationsverfahrens denkbar sind. Entscheidend für die letztendlich erzielte Trennschärfe der Implementierung sowie für die geforderten Mindestlängen der Lern- bzw. Testtexte sind sicherlich die folgenden Punkte:
* Verwendete Meßgrößen
* Analysierte Aspekte des Tippverhaltens
* Verwendete Kenngrößen
* Verwendetes Identifikationsverfahren

### Exaktere Beschreibung der Unterschiede zum Stand der Technik

### Analyse des Tippverhaltens

Wie in dem Kapitel "Stand der Technik" bereits erwähnt, stammt die dem hier vorgestellten System ähnlichste Methode von S. J. Shepherd. Die hier in dem Kapitel Lösung niedergelegten Ansätze sind jedoch sowohl von den zugrunde liegenden Ideen, als auch von den verwendeten Verfahren her wesentlich umfassender. Die wichtigsten Unterschiede werden im folgenden kurz erläutert.
* Analysierte Aspekte des Tippverhaltens
   Das System von Shepherd zielt ausschließlich auf die Schreibdynamik und den Tastendruck ab. Er erwähnt als mögliche Merkmale lediglich die zeitlichen Aspekte Übergangsdauer ("Intervals between keystrokes"), Anschlagdauer ("Duration of keystrokes"), Tipprate ("Rate of typing"; damit bezeichnet er die Anzahl der geschriebenen Zeichen oder Wörter pro Minute) und Fehlerhäufigkeit ("Frequency of errors"), sowie den Tastendruck (" Force of keystrokes"). Alle anderen Aspekte - insbesondere die Tastenauswahl und Verschränkungen (siehe Abschnitt Aspekte des Tippverhaltens) - wurden außer Acht gelassen.
   Er geht zwar kurz darauf ein, daß Verschränkungen ("rollover") vorkommen und von der Tastatur in gewohnter Weise behandelt werden, verwendet die diesbezüglichen Beobachtungen jedoch lediglich dazu, entsprechende Fehler bei der Berechnung der Anschlag- und Übergangsdauern zu vermeiden. D.h. er beschränkt sich hier einzig und allein auf den zeitlichen Aspekt und wertet die Reihenfolgeinformation an sich nicht weiter aus. Darüber hinaus erwähnt Shepherd noch die Möglichkeit, durch die von der Tastatur gelieferten Scan codes auch Tasten voneinander unterscheiden zu können, die mehrfach vorhanden sind (wie z.B. die beiden Shift-, CTRL- und ALT-Tasten, sofern vorhanden). Hierbei stellt er jedoch ebenfalls lediglich die Bedeutung für die zeitlichen Aspekte heraus. Auf die Tastenauswahl an sich, wie sie hier im Abschnitt "Analyse der Meßdaten" beschrieben ist, geht er nicht ein.
* Verwendete Kenngrößen.
   Die von Shepherd angegebenen Kenngrößen beschränken sich auf die Charakterisierung der Aspekte Anschlag- und Übergangsdauer, wobei zwischen den verschiedenen Tasten keine Unterschiede gemacht werden. Er verwendet lediglich Mittelwerte und Varianzen.
* Verwendete Verfahren
   Die von uns verwendeten Verfahren sind wesentlich weitreichender und komplexer und ermöglichen dadurch eine ungleich höhere Trennschärfe. So entspricht das von Shepherd dargelegte Identifikationsverfahren einer einfachen Form des weiter oben erläuterten "direkten Mustervergleichs" (sh. Punkt 1. im Abschnitt Identifizierung).

Abschließend sei noch erwähnt, daß es durchaus möglich ist, ein Identifikationsverfahren zu realisieren, das alleinig auf neuen hier dargelegten Ideen basiert. Zudem lassen sich offensichtlich die neuen und die alten Ansätze hervorragend miteinander kombinieren.

## Patentansprüche

1. Verfahren zur Verifizierung der Identität eines Benutzers einer mit einer Tastatur zur Erzeugung alphanumerischer Zeichen zu bedienenden Datenverarbeitungsanlage, wobei aus dem Muster von aktuellen Beobachtungen an der Tastatur mindestens ein auf das Tippverhalten des Benutzers hinweisender Kenngrößenvektor abgeleitet und dieser Kenngrößenvektor mit dem Kenngrößenvektor verglichen wird, der aus einem in der Datenverarbeitungsanlage abgelegten Referenzmuster abgeleitet ist,
**dadurch gekennzeichnet,**
daß unabhängig von der eingegebenen Zeichenfolge der Kenngrößenvektor aus der Reihenfolge der Aktionen Drücken bzw. Loslassen aufeinanderfolgend betätigter Tasten in Verbindung mit den Beobachtungen betreffend die Auswahl der betätigten Tasten ermittelt wird.

2. Verfahren nach Anspruch 1 ,
**dadurch gekennzeichnet,**
daß zusätzlich zu den Beobachtungen als Meßgrößen die Zeitpunkte der Ereignisse bzw. Betätigungen erfaßt werden.

3. Verfahren nach einem der vorhergehenden Ansprüche,
**dadurch gekennzeichnet,**
daß zusätzlich zu den Beobachtungen als Meßgröße der Tastendruck erfaßt wird.

4. Verfahren nach einem'der vorhergehenden Ansprüche,
**dadurch gekennzeichnet,**
daß aus dem Feld der Beobachtungen und/oder Meßgrößen Kenngrößen errechnet werden, die das Tippverhalten wiederspiegeln.

5. Verfahren nach einem der vorhergehenden Ansprüche,
**dadurch gekennzeichnet,**
daß zusätzlich zu den Beobachtungen als Meßgröße die Anschlagsdauer einer Taste erfaßt wird.

6. Verfahren nach Anspruch 5,
**dadurch gekennzeichnet,**
daß mehrere verschiedene Kenngrößen zu einem Kenngrößenvektor zusammengefaßt werden.

7. Verfahren nach einem der vorhergehenden Ansprüche,
**dadurch gekennzeichnet,**
daß das Referenzmuster durch Abschreiben einer vorgegebenen alphanumerischen Folge erstellt wird.

8. Verfahren nach einem der Ansprüche 1 bis 6,
**dadurch gekennzeichnet,**
daß das Referenzmuster durch freies Schreiben einer nicht vorgegebenen alphanumerischen Folge erstellt wird.

9. Verfahren nach einem der vorhergehenden Ansprüche,
**dadurch gekennzeichnet,**
daß das Referenzmuster während der Eingabe laufend aktualisiert wird.

## Claims

1. Method for verifying the identity of a user of a data processing installation which is to be operated using a keyboard for the purpose of producing alphanumeric characters, where at least one characteristic quantity vector referring to the typing behaviour of the user is derived from the pattern of current observations on the keyboard, and this characteristic quantity vector is compared with the characteristic quantity vector derived from a reference pattern stored in the data processing installation,
**characterized**
**in that**, irrespective of the character sequence entered, the characteristic quantity vector is ascertained from the order of the actions of pressing and releasing keys touched in succession in conjunction with the observations regarding the selection of the keys touched.

2. Method according to Claim 1,
**characterized**
**in that**, in addition to the observations, the measured values recorded are the times of the events or touches.

3. Method according to one of the preceding claims,
**characterized**
**in that**, in addition to the observations, the measured value recorded is the pressing of the key.

4. Method according to one of the preceding claims,
**characterized**
**in that** characteristic quantities which reflect the typing behaviour are calculated from the field of the observations and/or measured values.

5. Method according to one of the preceding claims,
**characterized**
**in that**, in addition to the observations, the measured value recorded is the length of time for which a key is pressed.

6. Method according to Claim 5,
**characterized**
**in that** a plurality of different characteristic quantities are combined to form a characteristic quantity vector.

7. Method according to one of the preceding claims,
**characterized**
**in that** the reference pattern is created by copying a prescribed alphanumeric sequence.

8. Method according to one of Claims 1 to 6,
**characterized**
**in that** the reference pattern is created by freely writing an unprescribed alphanumeric sequence.

9. Method according to one of the preceding claims,
**characterized**
**in that** the reference pattern is continually updated during entry.

## Revendications

1. Procédé pour la vérification de l'identité de l'utilisateur d'une installation de traitement de données, comportant un clavier générant des caractères alphanumériques, du type dans lequel, à partir du modèle des observations actuelles pratiquées sur le clavier, au moins un vecteur grandeur de reconnaissance est déduit de la tenue de frappe de l'utilisateur et ce vecteur grandeur de reconnaissance est comparé au vecteur grandeur de reconnaissance d'un modèle de référence introduit dans l'installation de traitement de données, **caractérisé en ce que**, indépendamment de la suite de caractères présentée, le vecteur grandeur de reconnaissance est fourni à partir de la suite de séries de pressions et de relâche se suivant les unes les autres sur les touches actionnées, en liaison avec les observations concernant le choix des touches actionnées.

2. Procédé selon la revendication 1, **caractérisé en ce que**, en addition aux observations, les moments ponctuels des événements, à savoir des actions sur les touches, sont saisis en tant que grandeurs de mesure.

3. Procédé selon l'une quelconque des revendications précédentes, **caractérisé en ce que**, en addition aux observations, la pression sur les touches est saisie en tant que grandeur de mesure.

4. Procédé selon l'une quelconque des revendications précédentes, **caractérisé en ce que**, à partir du champ des observations et/ou des grandeurs de mesure, sont calculées des grandeurs de reconnaissance qui reflètent la tenue de frappe.

5. Procédé selon l'une quelconque des revendications précédentes, **caractérisé en ce que**, en addition aux observations, la durée d'appui sur les touches est saisie en tant que grandeur de mesure.

6. Procédé selon la revendication 5, **caractérisé en ce que** plusieurs grandeurs de reconnaissance différentes sont rassemblées en un vecteur grandeur de reconnaissance.

7. Procédé selon l'une quelconque des revendications précédentes, **caractérisé en ce que** le modèle de référence est déterminé par copie d'une suite alphanumérique présupposée.

8. Procédé selon l'une quelconque des revendications 1 à 6, **caractérisé en ce que** le modèle de référence est déterminé par écriture libre d'une suite alphanumérique non présupposée.

9. Procédé selon l'une quelconque des revendications précédentes, **caractérisé en ce que** le modèle de référence est constamment actualisé au cours de la présentation.
